# EUROPEAN PATENT APPLICATION

(11) **EP 4 535 051 A1**
(43) Date of publication of application: **09.04.2025**
(21) Application number: 23811618.0
(22) Date of filing: 10.05.2023
(51) Int. Cl.: G02B 6/036

(54) **OPTICAL FIBER**

(30) Priority: 26.05.2022 JP 2022086237
(71) Applicant: SUMITOMO ELECTRIC INDUSTRIES, LTD., Osaka-shi, Osaka 541-0041 (JP)
(72) Inventor: SATO Shin, Osaka-shi, Osaka 541-0041 (JP); KAWAGUCHI Yuki, Osaka-shi, Osaka 541-0041 (JP); HASEGAWA Takemi, Osaka-shi, Osaka 541-0041 (JP); SAKUMA Hirotaka, Osaka-shi, Osaka 541-0041 (JP)
(74) Representative: TBK
(86) International application number: PCT/JP2023/017565
(87) International publication number: WO 2023/228743

(57) **Abstract**

An optical fiber comprising: a core (10) made of silica glass; and a cladding (20) that is made of silica glass and that surrounds the core (10), wherein Δ1-Δ2 ≥ 0.02 is satisfied, where Δ1 represents the greatest value of the specific refractive index difference of the core (10) in 0 ≤ r/a ≤ 0.3, and Δ2 represents the smallest value of the specific refractive index difference of the core (10) in 0 ≤ r/a ≤ 0.9, where r represents the radial distance from the center axis of the core (10), and a represents the radius of the core (10).

## Description

### TECHNICAL FIELD

The present disclosure relates to an optical fiber. This application claims priority based on Japanese Patent Application No. 2022-086237 filed on May 26, 2022, and the entire contents of the Japanese patent application are incorporated herein by reference.

### BACKGROUND ART

The transmission loss value at a wavelength in a near-infrared region is composed of the sum of a plurality of scattering and absorption factors such as Rayleigh scattering, infrared absorption, OH absorption, and scattering due to structural irregularity. Rayleigh scattering, infrared absorption, and OH absorption are scattering or absorption effects at the atomic scale of glass. The scattering due to structural irregularity is an effect caused by variations in the refractive index distribution at scales slightly larger than the atomic scale that affect the scattering of light.

One means for producing optical fibers with low transmission loss is to reduce Rayleigh scattering by decreasing the concentration of doped halogen elements. It is known that Rayleigh scattering is caused by uneven concentration distributions localized at the atomic scale and tends to increase in proportion to the concentration. Patent literatures 1 to 3 describe optical fibers in which the concentration of doped halogen elements are reduced. Non-patent literature 1 describes that Rayleigh scattering due to concentration unevenness tends to increase in proportion to the concentration.

### CITATION LIST

### PATENT LITERATURE

Patent literature 1: US Patent No. 7689085
Patent literature 2: U.S. Patent Application Publication No. 2014/0294355
Patent literature 3: U.S. Patent Application Publication No. 2017/0017032

### NON PATENT LITERATURE

Non-patent literature 1: H. Kakiuchida et al. "Rayleigh Scattering in Fluorine-Doped Silica Glass" Journal of Japan Applied Physics Vol. 42 (2003), pp. 6516 - 6517, Part 1, No. 10, October 2003

### SUMMARY OF INVENTION

An optical fiber according to an aspect of the present disclosure includes a core made of silica-based glass, and a cladding made of silica-based glass and surrounding the core. When a radial distance from a central axis of the core is represented by r and a radius of the core is represented by a, a maximum value Δ1 of a relative refractive index difference with 0 ≤ r/a ≤ 0.3 being satisfied and a minimum value Δ2 of a relative refractive index difference with 0 ≤ r/a ≤ 0.9 being satisfied satisfy Δ1 - Δ2 ≥ 0.02.

### BRIEF DESCRIPTION OF THE DRAWINGS

FIG. 1 is a cross-sectional view showing an optical fiber according to an embodiment.
FIG. 2 is a graph showing a refractive index distribution of an optical fiber according to an embodiment.
FIG. 3 is a graph showing organized results of relationships between refractive index distributions and transmission losses.
FIG. 4 is a graph showing a relationship between (Δ3 - Δ2)*l*(Δ1 - Δ2) and the root mean square of a relative refractive index difference of a core.
FIG. 5 is a graph showing a refractive index distribution of an optical fiber according to an Experimental Example 3.

### DETAILED DESCRIPTION

### [Problems to be Solved by Present Disclosure]

Halogen elements doped to an optical fiber preform not only contribute to the adjustment of the increase or decrease of the refractive index, but also have an effect of removing impurities in the glass at the time of the preform. Thus, when the content of the halogen elements is suppressed to zero, transmission loss is rather deteriorated.

In the optical fiber described in each of Patent Literatures 1 to 3, the refractive index is highest in the central region of the core and tends to decrease toward the outside in the radial direction due to the desorption of the halogen elements in the central region of the core. Thus, the variation in the refractive index in the core increases, and as a result, transmission loss deteriorates due to the influence of scattering due to structural irregularity.

An object of the present disclosure is to provide an optical fiber capable of reducing transmission loss.

### [Advantageous Effects of Present Disclosure]

According to the present disclosure, an optical fiber capable of reducing transmission loss can be provided.

### [Description of Embodiments of Present Disclosure]

First, embodiments of the present disclosure will be listed and described. (1) An optical fiber according to an aspect of the present disclosure includes a core made of silica-based glass, and a cladding made of silica-based glass and surrounding the core. When a radial distance from a central axis of the core is represented by r and a radius of the core is represented by a, a maximum value Δ1 of a relative refractive index difference with 0 ≤ r/a ≤ 0.3 being satisfied and a minimum value Δ2 of a relative refractive index difference with 0 ≤ r/a ≤ 0.9 being satisfied satisfy Δ1 - Δ2 ≥ 0.02. In this optical fiber, transmission loss can be reduced.

(2) In the above (1), the maximum value Δ1, the minimum value Δ2, and a maximum value Δ3 of a relative refractive index difference with 0.8 ≤ r/a ≤ 1 being satisfied may satisfy 0.5 ≤ (Δ3 - Δ2)/(Δ1 - Δ2) ≤ 1.5. In this case, transmission loss can be further reduced.

(3) In the above (1) or (2), when the radial distance at which a relative refractive index difference is the maximum value Δ1 is represented by r1, 0 ≤ r1/a ≤ 0.1 may be satisfied. In this case, transmission loss can be reduced.

(4) In any one of the above (1) to (3), when the radial distance at which a relative refractive index difference is the minimum value Δ2 is represented by r2, 0 ≤ r2/a ≤ 0.5 may be satisfied. In this case, transmission loss can be further reduced.

(5) In any one of the above (1) to (3), when the radial distance at which a relative refractive index difference is the minimum value Δ2 is represented by r2, 0 ≤ r2/a ≤ 0.4 may be satisfied. In this case, transmission loss can be further reduced.

(6) In any one of the above (1) to (3), when the radial distance at which a relative refractive index difference is the minimum value Δ2 is represented by r2, 0 ≤ r2/a ≤ 0.35 may be satisfied. In this case, transmission loss can be further reduced.

(7) In any one of the above (1) to (6), a minimum value Δ4 of a relative refractive index difference of the cladding may satisfy -0.6 ≤ Δ4 ≤ -0.2. In this case, transmission loss can be further reduced.

(8) In any one of the above (1) to (7), the maximum value Δ1 and the minimum value Δ2 may satisfy Δ1 - Δ2 ≥ 0.04. In this case, transmission loss can be further reduced.

(9) In any one of the above (1) to (7), the maximum value Δ1 and the minimum value Δ2 may satisfy Δ1 - Δ2 ≥ 0.06. In this case, transmission loss can be further reduced.

### [Details of Embodiments of Present Disclosure]

Specific examples of the optical fiber of the present disclosure will be described with reference to the accompanying drawings. Note that, the invention is not limited to the examples, and the invention is represented by the accompanying claims and is intended to include meaning equivalent to the accompanying claims and all modifications in the scope of the invention. In description of the accompanying drawings, the same reference numeral will be given to the same element, and reductant description thereof will be omitted.

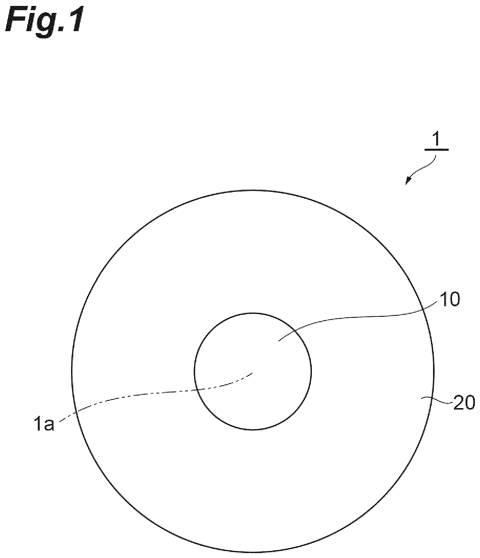

FIG. 1 is a cross-sectional view showing an optical fiber according to an embodiment. As shown in FIG. 1, an optical fiber 1 includes a core 10 extending along a central axis 1a and a cladding 20 surrounding core 10. Each of core 10 and cladding 20 is made of silica-based glass containing silica glass as a main component, in which a mass ratio of silica glass is 90% or more. Core 10 contains, for example, halogen elements such as fluorine (F) or chlorine (Cl), and an alkali metal element such as lithium (Li), sodium (Na), potassium (K), or rubidium (Rb). Cladding 20 may contain halogen elements such as F or Cl.

A refractive index of core 10 is higher than a refractive index of cladding 20. An effective area Aeff at a wavelength of 1550 nm of optical fiber 1 is 80 µm² to 160 µm². Transmission loss of optical fiber 1 at the wavelength of 1550 nm is 0.150 dB/km or less. A radius a of core 10 is, for example, 4 µm to 7 µm.

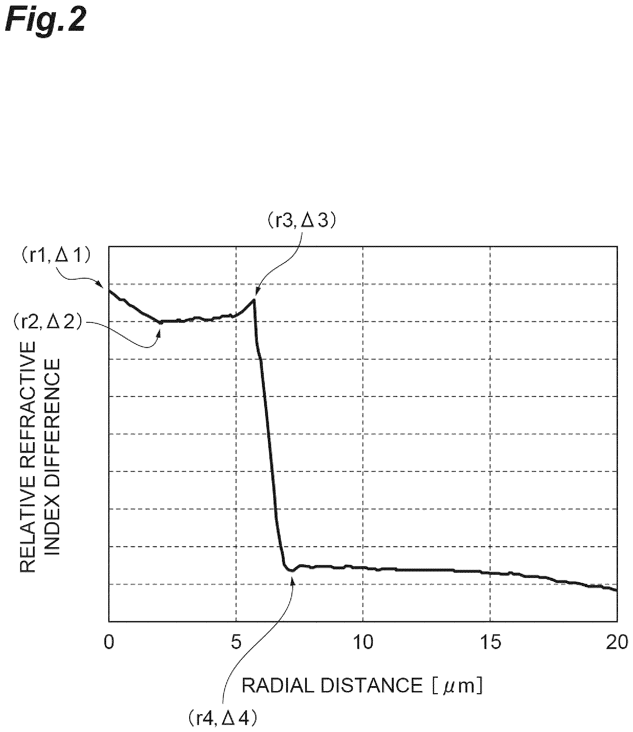

FIG. 2 is a graph showing a refractive index distribution of an optical fiber according to an embodiment. The vertical axis represents a relative refractive index difference Δ [%] with reference to a refractive index of pure silica (SiO₂), and the horizontal axis represents a radial distance r [µm] from central axis 1a of core 10. The position where the value dΔ(r)/dr obtained by differentiating the relative refractive index difference Δ(r) by radial distance r is a minimum value (steepest descending gradient) is defined as an interface (boundary) between core 10 and cladding 20. Radial distance r of the interface between core 10 and cladding 20 corresponds to radius a of core 10.

In a range in the radial direction in which radial distance r satisfies 0 ≤ r/a ≤ 0.3 with respect to radius a, a maximum value (local maximum) of the relative refractive index difference is Δ1 [%], and a radial distance at which the relative refractive index difference is Δ1 is represented by r1. When there are a plurality of local maxima, a minimum radial distance is defined as r1, and the local maximum is set as the maximum value Δ1. Δ1 satisfies -0.1 ≤ Δ1 ≤ 0.1, or may satisfy 0 ≤ r1/a ≤ 0.1.

In a range in the radial direction in which radial distance r satisfies 0 ≤ r/a ≤ 0.9 with respect to radius a, the minimum value (local minimum) of the relative refractive index difference is Δ2 [%], and a radial distance at which the relative refractive index difference is Δ2 is represented by r2. When there are a plurality of local minima, a minimum radial distance is defined as r2, and a local minimum is set as the minimum value Δ2. Δ2 satisfies -0.2 ≤ Δ2 ≤ 0, provided that Δ1 ≥ Δ2 is satisfied. 0 < r2/a ≤ 0.5, 0 < r2/a ≤ 0.4, or 0 ≤ r2/a ≤ 0.35 may be satisfied.

In a range in the radial direction in which radial distance r satisfies 0.8 ≤ r/a ≤ 1 with respect to radius a, a maximum value (local maximum) of the relative refractive index difference is Δ3 [%], and a radial distance at which the relative refractive index difference is Δ3 is represented by r3. When there are a plurality of local maxima, a maximum radial distance is defined as r3, and a local maximum is set as the maximum value Δ3. Δ3 satisfies -0.1 ≤ Δ3 ≤ 0.1, provided that Δ3 ≥ Δ2 is satisfied.

In a range in the radial direction satisfying r ≥ a, that is, in cladding 20, a minimum value (local minimum) of the relative refractive index difference is Δ4 [%], and a radial distance at which the relative refractive index difference is Δ4 is represented by r4. When there are a plurality of local minima, a minimum radial distance is defined as r4, and a local minimum is set as the minimum value Δ4. Δ4 may be -0.6 ≤ Δ4 ≤ -0.2.

In optical fiber 1, the maximum value Δ1 and the minimum value Δ2 satisfy Δ1 - Δ2 ≥ 0.02. The maximum value Δ1, the minimum value Δ2, and the maximum value Δ3 satisfy 0.5 ≤ (Δ3 - Δ2)/(Δ1 - Δ2) ≤ 1.5. Here, (Δ3 - Δ2)/(Δ1 - Δ2) is an index indicating the variation of the relative refractive index difference Δ in core 10. As the maximum value Δ1 of the central region of core 10 and the maximum value Δ3 of the outer peripheral portion of core 10 are closer to each other, (Δ3 - Δ2)1(Δ1 - Δ2) is closer to 1.

In order to obtain the refractive index distribution as shown in FIG. 2, it is necessary to increase the maximum value Δ1 in the central region of core 10 and the maximum value Δ3 near the interface between core 10 and cladding 20. Optical fiber 1 according to the present embodiment was realized by the following means.

The maximum value Δ1 was realized by locally reducing a halogen concentration, particularly an F concentration, in the central region of core 10. The local shortage of the F concentration can be realized by, for example, locally heating a glass portion corresponding to the central region of core 10 in a optical fiber preform after the impurities are removed in a dehydration step. The heating temperature may be 1000°C or more, or 1400°C or more. Each of a Cl concentration and the F concentration at the position of a radial distance r1 may be 1000 wtppm or less, or 500 wtppm or less.

In the production of the optical fiber preform, the doping amount of the halogen element is adjusted during the sintering of the glass body to be a core portion so that a halogen concentration in the outer peripheral portion of the core portion is reduced. However, since the F concentration in a cladding portion is 10000 wtppm or more, when the halogen concentration in the outer peripheral portion of the core portion is too low, the difference in glass viscosities at an interface between the core portion and the cladding portion becomes large. As a result, defects that lead to an increase in transmission loss at the interface are likely to occur. Thus, at the position of radial distance r3 corresponding to the interface position between core 10 and cladding 20, a halogen concentration may be 100 wtppm or more, or 500 wtppm or more.

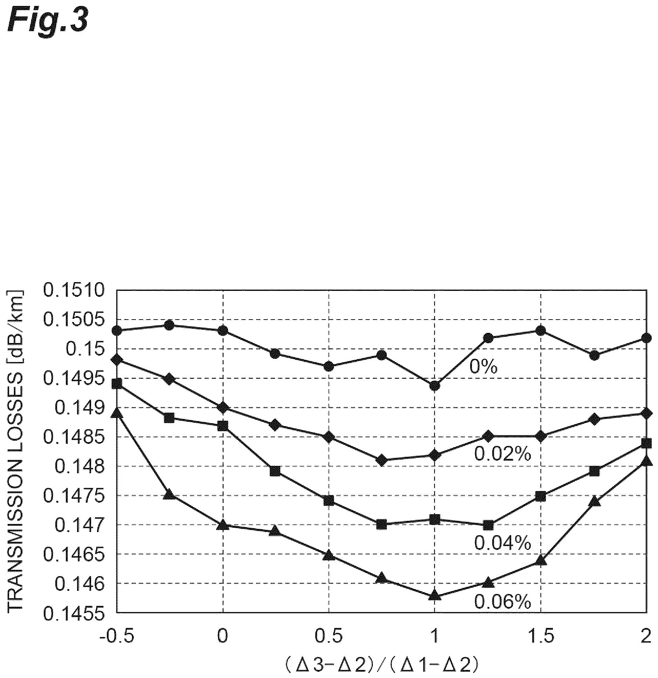

FIG. 3 is a graph showing organized results of relationships between refractive index distributions and transmission losses. In FIG. 3, a relationship between (Δ3 - Δ2)*l*(Δ1 - Δ2) and transmission loss is plotted for each optical fiber in which Δ1 - Δ2 is 0%, 0.02%, 0.04%, and 0.06%. The value of Δ1 - Δ2 of each optical fiber includes an error of ± 0.005%.

According to FIG. 3, it can be confirmed that Δ1 - Δ2 ≥ 0.02, Δ1 - Δ2 ≥ 0.04, or Δ1 - Δ2 ≥ 0.06 may be satisfied in order to reduce transmission loss regardless of (Δ3 - Δ2)/(Δ1 - Δ2). When Δ1 - Δ2 ≥ 0.02 is satisfied, transmission loss of 0.150 dB/km or less can be realized. When Δ1 - Δ2 ≥ 0.04 is satisfied, transmission loss of 0.1495 dB/km or less can be realized. When Δ1 - Δ2 ≥ 0.06 is satisfied, transmission loss of 0.149 dB/km or less can be realized. This result suggests that Δ1 - Δ2 corresponds to the amount of decrease in the halogen concentration of the central region of core 10, and that Rayleigh scattering due to concentration unevenness decreases with the decrease in the halogen concentration, and as a result, transmission loss decreases.

Further, according to FIG. 3, it can be confirmed that 0.5 ≤ (Δ3 - Δ2)*l*(Δ1 - Δ2) ≤ 1.5 may be satisfied in order to reduce transmission loss. In this range, for example, transmission loss of 0.1465 dB/km or less can be realized for an optical fiber having Δ1 - Δ2 = is 0.06 ± 0.005%.

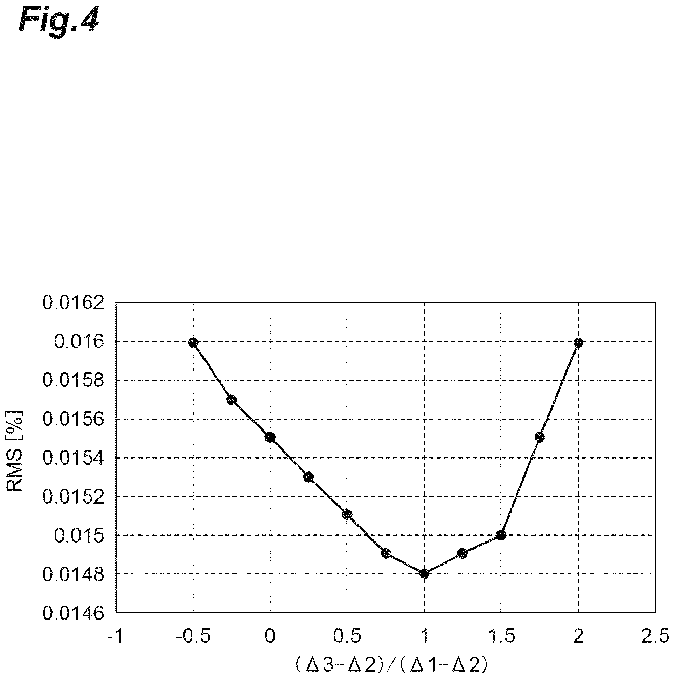

FIG. 4 is a graph showing a relationship between (Δ3 - Δ2)/(Δ1 - Δ2) and the root mean square (RMS) of the relative refractive index difference of a core. The RMS of the relative refractive index difference of the core is the square root of the value obtained by averaging the mean square variation (Δ(r) - Δe)² of the relative refractive index difference Δ(r) in the range of 0 ≤ r ≤ r3 with respect to the effective relative refractive index difference Δe in the range of 0 ≤ r ≤ r3. As (Δ3 - Δ2)/(Δ1 - Δ2) is closer to 1, the mean square variation (Δ(r) - Δe)² is also reduced. Thus, it can be confirmed that scattering due to structural irregularity is reduced, and as a result, transmission loss is reduced.

From the above, in order to realize optical fiber 1 with low loss, Δ1 - Δ2 ≥ 0.02 and 0.5 ≤ (Δ3 - Δ2)*l*(Δ1 - Δ2) ≤ 1.5 may be satisfied, Δ1 - Δ2 ≥ 0.04 and 0.5 ≤ (Δ3 - Δ2)*l*(Δ1 - Δ2) ≤ 1.5 may be satisfied, or Δ1 - Δ2 ≥ 0.06 and 0.5 ≤ (Δ3 - Δ2)*l*(Δ1 - Δ2) ≤ 1.5 may be satisfied. When Δ1 - Δ2 ≥ 0.02 and 0.5 ≤ (Δ3 - Δ2)/(Δ1 - Δ2) ≤ 1.5 are satisfied, transmission loss of 0.1485 dB/km or less can be realized. When Δ1 - Δ2 ≥ 0.04 and 0.5 ≤ (Δ3 - Δ2)*l*(Δ1 - Δ2) ≤ 1.5 are satisfied, transmission loss of 0.1475 dB/km or less can be realized. When Δ1 - Δ2 ≥ 0.06 and 0.5 ≤ (Δ3 - Δ2)*l*(Δ1 - Δ2) ≤ 1.5 are satisfied, transmission loss of 0.1465 dB/km or less can be realized.

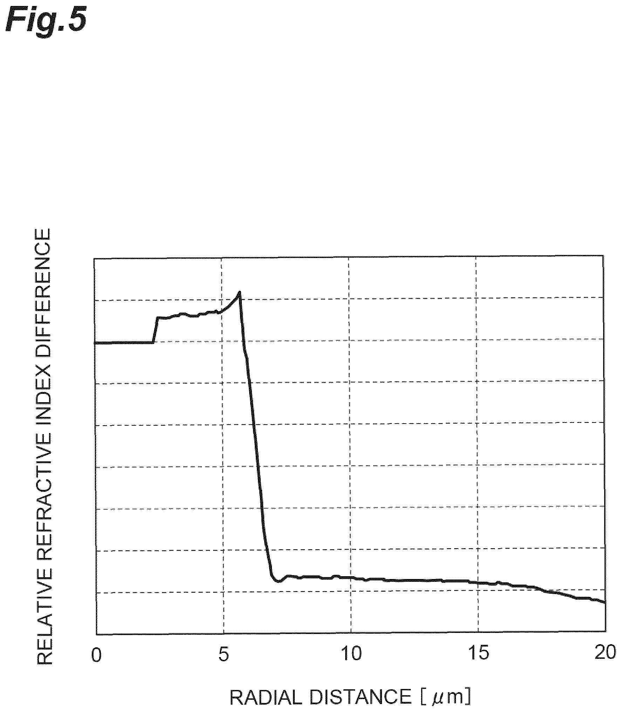

Optical fibers of Experimental Examples 1 to 4 were used to examine optical characteristics depending on the difference in refractive index distribution. The optical fiber of the Experimental Example 1 corresponds to optical fiber 1 according to the embodiment, and has a refractive index profile in which the relative refractive index difference increases at radial distances r1 and r3. The optical fiber according to the Experimental Example 2 has a refractive index profile in which the relative refractive index difference is high at radial distance r1 and the relative refractive index difference is low at radial distance r3. As shown in FIG. 5, the optical fiber according to the Experimental Example 3 has a typical ring-core shaped refractive index profile in which the relative refractive index difference is high at radial distance r3 and the relative refractive index difference is low at radial distance r1. It can be said that the optical fiber according to the Experimental Example 1 also has the refractive ring-core shaped index profile. The optical fiber according to the Experimental Example 4 has a refractive index profile in which the relative refractive index difference is low at both of radial distances r1 and r3.

Table 1 shows Δ1 - Δ2 [%], Δ3 - Δ2 [%], transmission loss [dB/km] at the wavelength of 1550 nm, effective area Aeff [µm²] at the wavelength of 1550 nm, wavelength dispersion [ps/nm/km] at the wavelength of 1550 nm, and fiber cutoff wavelengths λc [nm] for each optical fiber.

**[Table 1]**

| Experimental Example | Δ1-Δ2 [%] | Δ3-Δ2 [%] | Transmission loss [dB/km] | Aeff [µm²] | Wavelength dispersion [ps/nm/km] | λc [nm] |
|---|---|---|---|---|---|---|
| 1 | 0.6 | 0.6 | 0.146 | 112 | 21.9 | 1420 |
| 2 | 0.6 | 0 | 0.147 | 113 | 21.2 | 1260 |
| 3 | 0 | 0.6 | 0.151 | 112 | 22.0 | 1460 |
| 4 | 0 | 0 | 0.150 | 111 | 21.7 | 1360 |

According to the results of Table 1, it can be confirmed that the optical fiber of the Experimental Example 1 exhibits the lowest transmission loss. This is considered to be because the halogen concentration of the core is reduced in the central region of the core having a refractive index profile in a protruding shape due to the absence of the halogen concentration. It can also be confirmed that the optical fiber of the Experimental Example 1 has characteristics substantially equivalent to those of the optical fiber of the Experimental Example 3 in terms of effective area Aeff, wavelength dispersion, and fiber cutoff wavelength λc. This is because effective area Aeff with respect to the mode field diameter can be increased by having the ring-core shaped refractive index profile in which the relative refractive index difference is high at the outer peripheral portion of the core, and thus the confinement of light can be strengthened. From the above, it can be confirmed that optical fiber 1 of the present embodiment suppresses the deterioration of transmission loss while maintaining the bending loss resistance.

While the embodiments have been described, the present disclosure is not necessarily limited to the above-described embodiments and modifications, and various changes can be made without departing from the spirit and scope of the present disclosure.

### REFERENCE SIGNS LIST

1 optical fiber
1a central axis
10 core
20 cladding

## Claims

1. An optical fiber comprising:
a core made of silica-based glass; and
a cladding made of silica-based glass and surrounding the core,
wherein, when a radial distance from a central axis of the core is represented by r and a radius of the core is represented by a, a maximum value Δ1 of a relative refractive index difference with 0 ≤ r/a ≤ 0.3 being satisfied and a minimum value Δ2 of a relative refractive index difference with 0 ≤ r/a ≤ 0.9 being satisfied satisfy Δ1 - Δ2 ≥ 0.02.

2. The optical fiber according to claim 1,
wherein the maximum value Δ1, the minimum value Δ2, and a maximum value Δ3 of a relative refractive index difference with 0.8 ≤ r/a ≤ 1 being satisfied satisfy 0.5 ≤ (Δ3 - Δ2)/(Δ1 - Δ2) ≤ 1.5.

3. The optical fiber according to claim 1 or claim 2,
wherein, when the radial distance at which a relative refractive index difference is the maximum value Δ1 is represented by r1, 0 ≤ r1/a ≤ 0.1 is satisfied.

4. The optical fiber according to any one of claim 1 to claim 3,
wherein, when the radial distance at which a relative refractive index difference is the minimum value Δ2 is represented by r2, 0 < r2/a ≤ 0.5 is satisfied.

5. The optical fiber according to any one of claim 1 to claim 3,
wherein, when the radial distance at which a relative refractive index difference is the minimum value Δ2 is represented by r2, 0 < r2/a ≤ 0.4 is satisfied.

6. The optical fiber according to any one of claim 1 to claim 3,
wherein, when the radial distance at which a relative refractive index difference is the minimum value Δ2 is represented by r2, 0 < r2/a ≤ 0.35 is satisfied.

7. The optical fiber according to any one of claim 1 to claim 6, wherein a minimum value Δ4 of a relative refractive index difference of the cladding satisfies -0.6 ≤ Δ4 ≤ -0.2.

8. The optical fiber according to any one of claim 1 to claim 7,
wherein the maximum value Δ1 and the minimum value Δ2 satisfy Δ1 - Δ2 ≥ 0.04.

9. The optical fiber according to any one of claim 1 to claim 7,
wherein the maximum value Δ1 and the minimum value Δ2 satisfy Δ1 - Δ2 ≥ 0.06.

10. The optical fiber according to any one of claim 1 to claim 9,
wherein the maximum value Δ1 satisfies -0.1 ≤ Δ1 ≤ 0.1.

11. The optical fiber according to any one of claim 1 to claim 10,
wherein the minimum value Δ2 satisfies -0.2 ≤ Δ2 ≤ 0.

12. The optical fiber according to claim 2,
wherein the maximum value Δ3 satisfies -0.1 ≤ Δ3 ≤ 0.1.

13. The optical fiber according to claim 7,
wherein the minimum value Δ4 satisfies -0.6 ≤ Δ4 ≤ -0.2.

14. The optical fiber according to any one of claim 1 to claim 13,
wherein the core is made of silica-based glass in which a mass ratio of silica glass is 90% or more.

15. The optical fiber according to any one of claim 1 to claim 14,
wherein the cladding is made of silica-based glass in which a mass ratio of silica glass is 90% or more.
